# EUROPÄISCHE PATENTSCHRIFT

(11) **EP 0 869 338 B1**
(45) Veröffentlichungstag und Bekanntmachung des Hinweises auf die Patenterteilung: **12.11.2008**
(21) Anmeldenummer: 97116934.7
(22) Anmeldetag: 30.09.1997
(51) Int. Cl.: G01F 11/28, G01F 19/00, B65D 83/14

(54) **Dosierbehälter**
Dosing container
Récipient doseur

(30) Priorität: 03.04.1997 DE 29705992 U
(43) Veröffentlichungstag der Anmeldung: 07.10.1998
(73) Patentinhaber: Dürr-Dental GmbH & Co. KG, D-74321 Bietigheim-Bissingen (DE)
(72) Erfinder: Nonnenmacher, Eberhardt, 74379 Ingersheim (DE)
(74) Vertreter: Ostertag, Reinhard

(56) Entgegenhaltungen:
- EP-A- 0 118 217
- EP-A- 0 316 636
- EP-A- 0 657 382
- DE-B- 1 075 967
- FR-A- 595 635
- US-A- 5 292 039

## Beschreibung

Die Erfindung betrifft einen Behälter zum Ausgießen vorgegebener Flüssigkeitsvolumina mit einem in das Behälterinnere geführten Tauchrohr.

Behälter mit Tauchrohren zum Ausbringen der in ihnen befindlichen Flüssigkeit sind in Form von Spraybehälter für Fensterreinigungsmittel und dergleichen an sich bekannt. Bei ihnen reicht das Tauchrohr bis an die Bodenwand, um den Behälter vollständig leeren zu können. Ein auf einen Behälterstutzen aufgeschraubter Dispenser, zu welchem das Tauchrohr führt, hat eine vom Benutzer betätigbare Pumpe, die für jeden Betätigungshub ein durch ihre Verdrängung vorgegebenes Flüssigkeitsvolumen aus dem Behälterinneren ansaugt und abgibt. Diese Flüssigkeitsvolumen liegen im Bereich von Bruchteilen eines ml bis hin zu einigen ml.

Bei einem in der FR 595 635 A offenbarten Behälter wird zur Einstellung der Abgabemenge die Orientierung des Tauchrohres zum Behälter geändert. Der Behälter selbst wird für die unterschiedlichen Entnahmen gleich gelagert.

Bei einem Behälter nach der EP 0 657 382 A ist ein Ventil vogesehen, welches die Flüssigkeitsabgabe aus dem Behälter steuert.

Gemäß der EP 0 118 217 A ist ein kippbarer Zwischenbehälter vorgesehen, der die Form eines Kreissektors hat, an dessen tiefstem Ende eine Auslaßleitung angebracht ist. Je nach der Winkelstellung dieses sektorförmigen Behälters wird mehr oder weniger Flüssigkeit in eine Auslaßleitung abgegeben.

Die EP 0 316 636 A2 zeigt einen Flüssigkeitsbehälter, der kein Tauchrohr aufweist sondern einen bei der Mitte seiner Bodenfläche liegenden Auslaß. Damit kann man den Behälter bei vertikaler Ausrichtung vollständig leerlaufen lassen, während er beim Aufstellen auf einer Längsseite nur halb leerlaufen kann.

Die DE-1 075 967 B zeigt einen Behälter mit einem aufgesetzten Dosierbehälter. Durch mehrmaliges Kippen kann zunächst der Dosierbehälter gefüllt werden und anschließend geleert werden.

Bei einem in der US 5 292 039 beschriebenen Behälter erfolgt das Abmessen der Flüssigkeit unter Verwendung eines aufgesetzten Dosierbehälters, der unter Verwendung eines ventiles gefüllt wird.

Für manche Anwendungen ist es nun notwendig, größere vorgegebene Flüssigkeitsvolumina aus einem Behälter auszubringen, die typischerweise im Bereich zwischen Bruchteilen eines Liters und einigen Litern liegen. Bei Verwendung der eingangs beschriebenen Behälter mit einer handbetätigten kleinen Dosierpumpe wäre hierfür aber eine sehr große Anzahl von Betätigungen der Pumpe notwendig. Um dies zu vermeiden, könnte man im Prinzip eine zeitgesteuerte elektrische Dosierpumpe verwenden. Derartige Pumpen sind aber teuer.

Durch die vorliegende Erfindung soll daher ein Behälter gemäß dem Oberbegriff des Anspruches 1 bzw. 3 so weitergebildet werden, daß vorgegebene Volumina im Bereich vom Bruchteil eines Liters bis hin zu mehreren Litern rasch und präzise aus dem Behälter ausgebracht werden können, der Behälter aber insgesamt ein preisgünstiges Teil ist.

Diese Aufgabe ist erfindungsgemäß gelöst durch einen Behälter mit den im Anspruch 1 bzw. 3 angegebenen Merkmalen.

Bei dem erfindungsgemäßen Behälter kann man unterschiedliche Relativstellungen zwischen dem Ende des Tauchrohres und dem Spiegel der im Behälter befindlichen Flüssigkeit einstellen. Entsprechend diesen verschiedenen Relativlagen kann man unterschiedliche vorgegebene Flüssigkeitsmengen aus dem Behälter ausbringen, die dadurch vorgegeben sind, daß das Ende der Tauchrohres aus dem Flüssigkeitsspiegel austaucht, was bei den unterschiedlichen Relativlagen zwischen Tauchrohrende und Flüssigkeitsspiegel bei unterschiedlichen Restflüssigkeitsmengen im Behälter erfolgt.

Die Realisierung derartiger unterschiedlicher Relativlagen zwischen Tauchrohrende und Spiegel der im Behälter befindlichen Flüssigkeit läßt sich mit einfachen konstruktiven Maßnahmen am Behälter oder an seiner Anbringung realisieren. Die hierdurch bedingten Kosten sind nur gering, insbesondere bei Massenfertigung des Behälters als Kunststoffteil.

Die Formgebung eines erfindungsgemäßen Behälters läßt sich bei den heute gängigen Massenherstellungsverfahren sowohl für Blechbehälter als auch für Kunststoffbehälter auf einfache Weise durch entsprechende Gestaltung der Herstellungsform realisieren. Hierbei kann man gemäß Anspruch 1 praktisch ohne Mehrkosten mehrere als Standfläche geeignete Wände realisieren, die wahlweise, in der Regel in vorgegebener Reihenfolge als Behälter-Standfläche verwendet werden.

Die Ausführungsform der Erfindung gemäß Anspruch 3 wird für solche Anwendungen bevorzugt, bei denen für den Behälter keine horizontale Aufstellfläche zur Verfügung steht. Eine mit der Aufhängestelle des Behälters zusammenarbeitende Tragstruktur (notfalls die Finger eines Benutzers) läßt sich aber überall finden. Dadurch, daß sich der Schwerpunkt des ganz oder nur noch teilweise gefüllten Behälters unter die jeweils gewählte Aufhängestelle stellt, wird die zugehörige jeweilige Relativstellung zwischen Tauchrohrende und Flüssigkeitsspiegel eingestellt.

Vorteilhafte Weiterbildungen der Erfindung sind in Unteransprüchen angegeben.

Dabei ist die im Anspruch 2 angegebene Wahl unterschiedlicher Standflächen, die im wesentlichen einen rechten Winkel miteinander einschließen, im Hinblick auf kompakte Form und deutliche Unterscheidung der verschiedenen Standflächen von Vorteil.

Die Weiterbildung der Erfindung gemäß Anspruch 5 ist im Hinblick auf ein nochmaliges Verbessern des Ausbringens von Restflüssigkeit über das Tauchrohr von Vorteil.

Die Weiterbildung der Erfindung gemäß Anspruch 6 erlaubt es, unterschiedliche Verbraucher über unterschiedliche Verbindungsleitungen, insbesondere solche unterschiedlichen Durchmessers, mit dem Behälter zu verbinden.

Die Weiterbildung der Erfindung gemäß Anspruch 7 ist im Hinblick auf einfache Herstellung des Behälters von Vorteil. Der eigentliche Behälter hat einfache Geometrie und kann nach den bekannten Herstellungsverfahren, insbesondere Blasformen, preisgünstig gefertigt werden. Der Zapfkopf, der filigranere Geometrie aufweist und gegebenenfalls auch mit Fittings zum Anschließen von Verbrauchern versehen werden muß, ist ein gesondertes Behälterteil und kann z.B. in Spritztechnik aus einem härteren Kunststoffmaterial hergestellt sein.

Bei einem Behälter gemäß Anspruch 9 sind die Fittings zum Anschließen der Verbraucher nach außen abgedeckt und damit gegen unbeabsichtigtes Lösen der Verbindung geschützt. Bei geschlossenem Deckel sind sie auch bei längerer Nichtbenutzung des Behälters gegen Verschmut-zung geschützt.

Die Weiterbildung der Erfindung gemäß Anspruch 10 ist im Hinblick auf preisgünstige Herstellung eines durch einen Deckel verschließbaren Zapfkopfes von Vorteil.

Bei einem Behälter gemäß Anspruch 12 erfolgt ein ständiger Druckausgleich beim Entleeren. Damit braucht der Behälter selbst nicht aus sehr starrem Material gefertigt zu werden, und trotzdem ist gewährleistet, daß genau die gewünschten Flüssigkeitsvolumina abgegeben werden.

Ein Behälter gemäß Anspruch 13 hat klar erkennbare unterschiedliche Aufstellflächen; die anderen wände des Behälters sind so geformt, daß sie erkenntlich nicht als Standfläche dienen können.

Die Weiterbildung der Erfindung gemäß Anspruch 14 erleichtert das Tragen und Positionieren eines Behälters und unterstreicht nochmals die Funktion der Aufstellflächen.

Nachstehend wird die Erfindung anhand von Ausführungsbeispielen unter Bezugnahme auf die Zeichnung näher erläutert. In dieser sind verschiedene Dosierflaschen so dargestellt, wie wenn ihre Wände aus transparentem Material bestünden. Es zeigen:
- Figur 1:: eine seitliche Ansicht eines Behälters zum Abgeben zweier gleicher Flüssigkeitsvolumina;
- Figur 2:: eine Aufsicht auf den in Figur 1 gezeigten Behälter von links;
- Figur 3:: einen axialen Schnitt durch einen aufgeschraubten Zapfkopf des Behälters nach den Figuren 1 und 2 mit über ein Filmscharnier angelenktem Deckel, gezeigt im geöffneten Zustand;
- Figur 4:: eine Aufsicht auf den in Figur 3 gezeigten Zapfkopf; und
- Figuren 5 bis 7:: ähnliche Ansichten wie Figur 1, in welchen jedoch abgewandelte Behälter wiedergegeben sind.

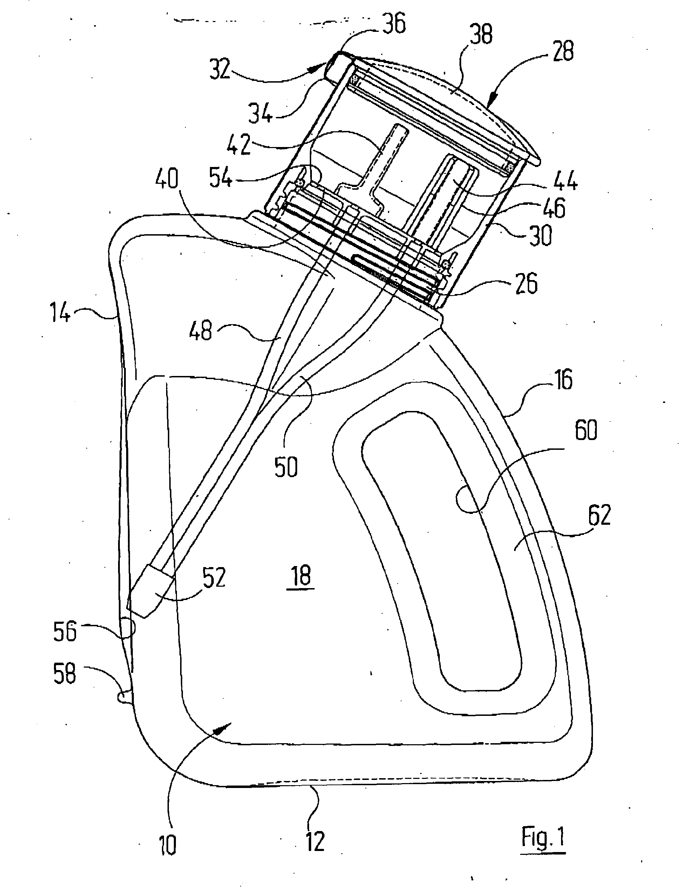

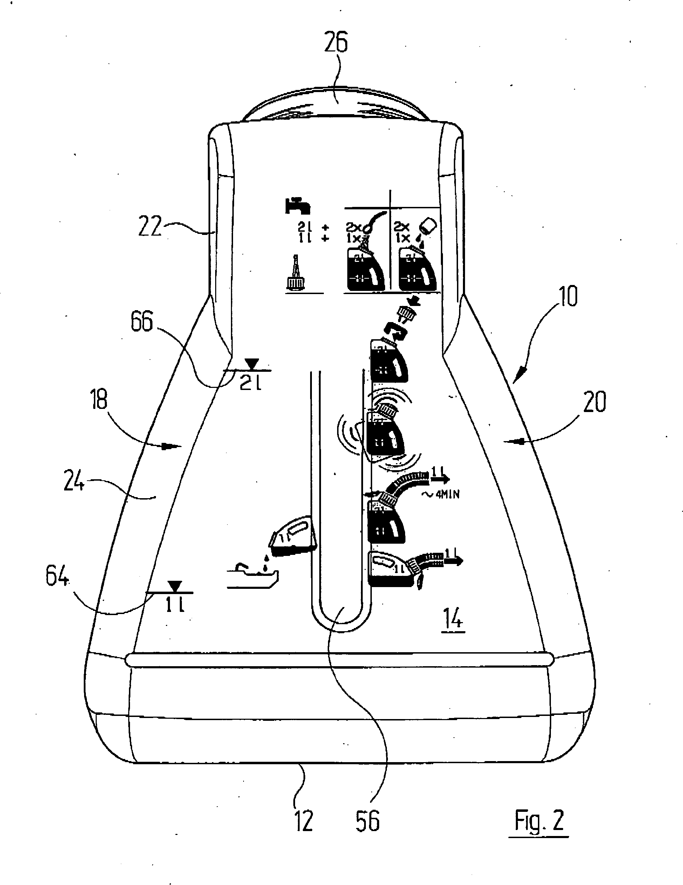

Die Figuren 1 und 2 zeigen einen blasgeformten Flaschenkörper 10 mit einer Bodenwand 12 und einer hierzu senkrechten Stirnwand 14. Die Stirnwand 14 ist etwa ein Drittel länger als die Bodenwand 12. Die beiden Enden dieser im wesentlichen senkrecht zueinander verlaufenden Wände sind durch eine in der Ansicht von Figur 1 etwa viertel-elliptische Rückwand 16 miteinander verbunden. Der durch die vorgenannten wände gebildete Flaschenteil ist durch zwei zur Mittelebene des Flaschenkörpers symmetrischen Seitenwände 18, 20 verschlossen. Diese sind in einem oberen Wandabschnitt 22 eben und in einem unteren Wandabschnitt 24 birnenähnlich gewölbt.

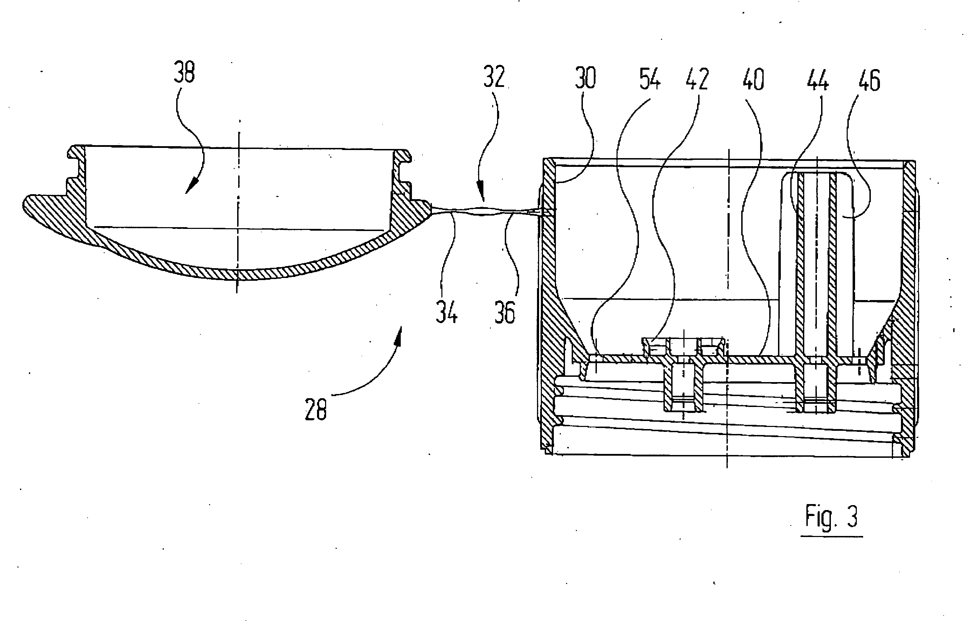

Die Rückwand 16 trägt in ihrem oberen Drittel einen Gewindestutzen 26. Auf diesen ist ein insgesamt mit 28 bezeichnetes Zapf- und Verschlußteil aufgeschraubt. Letzteres hat eine zylindrische Umfangswand 30, an welcher über ein Filmscharnier 32 mit zwei Gelenkbereichen 34, 36 (vgl. Figur 3) ein Deckel 38 angelenkt ist.

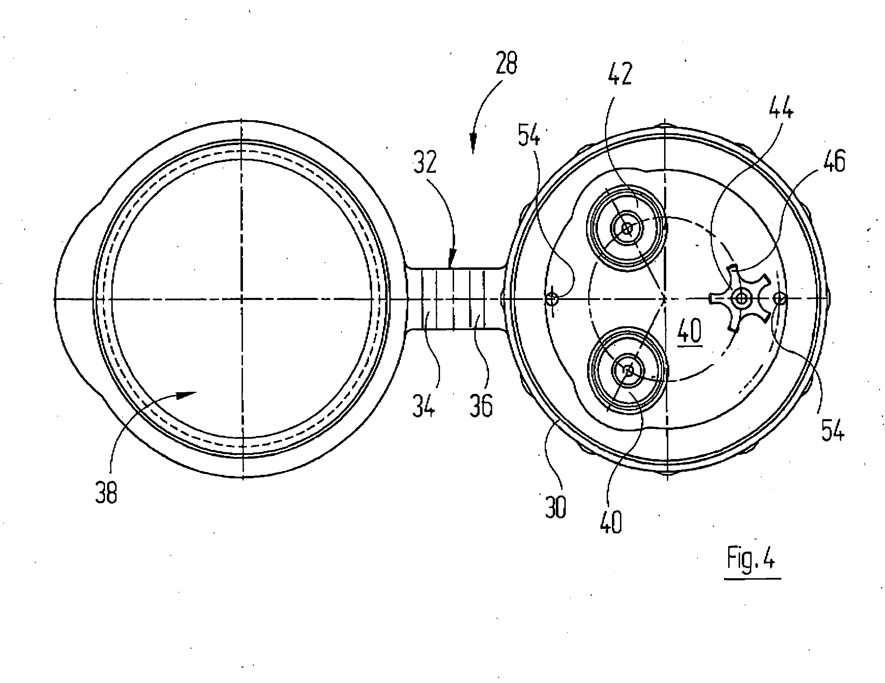

Eine transversale Tragwand 40 des Zapf- und Verschlußteiles 28 trägt, wie insbesondere aus den Figuren 3 und 4 ersichtlich, drei in Umfangsrichtung gleich verteilte Anschlußstutzen 40, 42, 44. Die Anschlußstutzen 40 und 42 sind symmetrisch zur Mittelebene des Zapf-und Verschlußteiles 28 angeordnet und sind gestufte Rotationskörper. Der Anschlußstutzen 44 weist eine Mehrzahl in radialer Richtung verlaufender regelmäßig um die Stutzenachse verteilter Rippen 46 auf.

In unter die Tragwand 40 geführte Enden der Anschlußstutzen 40, 42, 44 sind drei Tauchrohre eingesetzt, von denen die Tauchrohre 48, 50 in der Figur 1 sichtbar sind. Die unteren Enden der Tauchrohre sind offen und durch eine Olive 52 zusammengefaßt.

Ferner sind in der Tragwand 40 zwei einander diametral gegenüberliegende Belüftungsöffnungen 54 vorgesehen.

Die Gestalt und Länge der Tauchrohre ist so gewählt, daß die Olive 52 in eine abfallende Rinne 56 eingreift, die in die Stirnwand 14 eingearbeitet ist. Unterhalb der Rinne 56 trägt die Stirnwand 14 eine Fußleiste 58, die etwas höher ist als die Rinne 56.

Im in Figur 1 rechts gelegenen Abschnitt des Flaschenkörpers 10 ist eine Durchgreiföffnung 60 vorgesehen, die zusammen mit der Rückwand 16 einen Griff 62 vorgibt.

Auf der Stirnwand 14 sind zwei Markierungen 64, 66 vorgegeben, die den Flüssigkeitsspiegel bei Füllung mit einem Liter bzw. zwei Liter Flüssigkeit vorgeben.

Füllt man den oben beschriebenen Behälter bis zur 2 1-Marke und schließt man anschließend einen Saugschlauch an einen der Anschlußstutzen 40, 42, 44 an, so kann man die im Flaschenkörper 10 befindliche Flüssigkeit bis zu den unteren Enden der Tauchrohre leersaugen. Dieses Ende der Tauchrohre liegt bei der 1 1-Marke.

Aus der Flasche kann man anschließend genau einen weiteren Liter Flüssigkeit absaugen, wenn man die Flasche statt auf die Bodenwand 12 auf die Stirnwand 14 stellt. Die unteren Enden der Tauchrohre liegen dann unten im im Flaschenkörper 10 verbliebenen Flüssigkeitsvolumen, und man kann durch Saugen an einem der Anschlußstutzen 40, 42, 44 den Rest der Flüssigkeit aus dem Flaschenkörper absaugen.

Ohne visuelle Kontrolle werden somit beim Leeren der Dosierflasche zwei genau vorgegebene Flüssigkeitsvolumina abgegeben.

Es versteht sich, daß man das oben beschriebene Ausführungsbeispiel verschiedentlich abwandeln kann, um mehr als zwei Flüssigkeitsvolumina absaugen zu können. Hierzu braucht man nur dem Flaschenkörper eine entsprechend größere Anzahl von Standflächen zu geben. So kann man z.B. eine oder beide der Seitenwände 18, 20 eben verlaufend ausbilden, so daß auch diese Wände als Standflächen in Frage kommen. Die Tauchrohre werden dann so gebogen, daß ihr Ende unterschiedlichen Abstand von den beiden Seitenwänden 18, 20 aufweist. Auch kann man die gekrümmte Rückwand 16 durch eine geradflächige Wand ersetzen. Schließlich kann man auch am Übergang zwischen Bodenwand und Stirnwand 14 noch eine größere geradflächige wand vorsehen, die z.B. unter 45° zur Bodenwand 12 geneigt ist.

Wichtig ist nur, daß man eine Mehrzahl vorgegebener definierter Lagen für den Flaschenkörper schafft, in welchen dann die Enden der Tauchrohre so liegen, daß unter ihnen unterschiedliche Flüssigkeits-Restvolumina verbleiben.

Mit einem Behälter, wie er oben beschrieben wurde, können auch unterschiedliche vorgegebene Flüssigkeitsvolumina entnommen werden, wenn man z.B. eine einem mittleren Restvolumen zugeordnete Standfläche überspringt und gleich zur nächstfolgenden oder letzten Standfläche weitergeht. Auch in diesem Falle erhält man ohne visuelle Kontrolle die Abgabe vorgegebener Flüssigkeitsmengen.

Für Einsätze an Orten, wo definierte Aufstellflächen für den Flaschenkörper nicht zur Verfügung stehen, kann man am Flaschenkörper 10 Aufhängelaschen vorsehen, an denen aufgehängt der Flaschenkörper zusammen mit der in ihm befindlichen Flüssigkeit unter schwerkrafteinwirkung eine vorgegebene Stellung einnimmt.

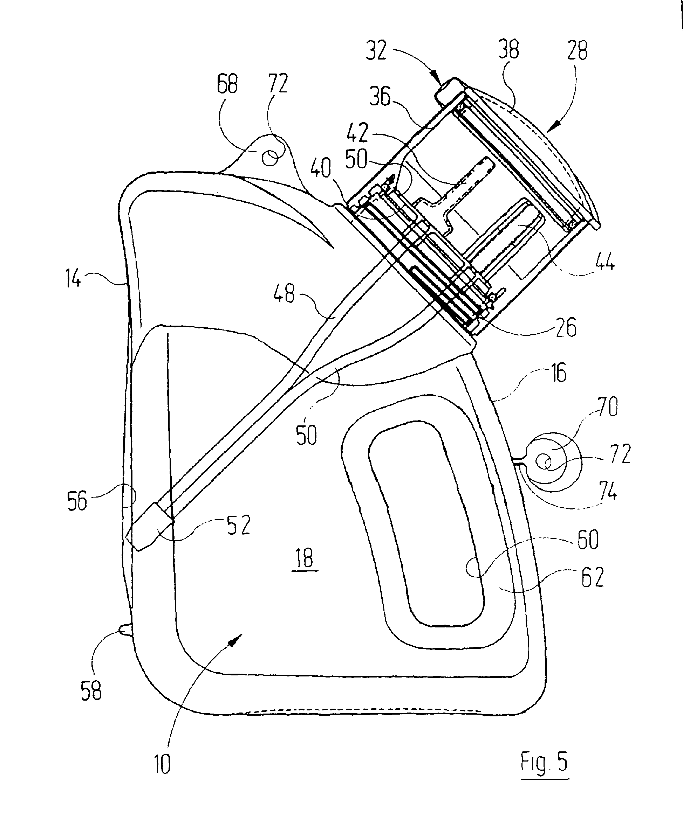

Bei dem in Figur 5 dargestellten Ausführungsbeispiel, welches im übrigen demjenigen nach den Figuren 1-4 entspricht, sind hierzu zusätzlich im oberen Bereich der Rückwand 16 und im rechts unten gelegenen Bereich der Rückwand 16 zwei Aufhängelaschen 68, 70 vorgesehen, die jeweils eine Öffnung 72 aufweisen, an der sie an aufgehängt werden können. Die Aufhängelasche 70 ist darüber hinaus nicht drehfest sondern über einen Biegeabschnitt 74 mit dem Flaschenkörper 10 verbunden, so daß man die Aufhängelasche 70 auch mit den Fingern ergreifen kann und sich der Flaschenkörper trotz flächigen Kontakts mit den Fingern so einpendeln kann, daß der Schwerpunkt unter dem Biegeabschnitt 74 liegt.

Beim Ausführungsbeispiel nach Figur 5 ist die Lage der Aufhängelaschen 68, 70 so gewählt, daß die Flasche mit Inhalt beim Ende eines Entnahmevorganges sich genauso orientiert, wie wenn sie mit der Bodenwand 12 bzw. der Stirnwand 14 auf eine horizontale Aufstellfläche aufgestellt wäre.

Das Entnehmen definierter Flüssigkeitsmengen aus der Flasche gemäß Figur 5 erfolgt wie obenstehend unter Bezugnahme auf die Figuren 1-4 beschrieben.

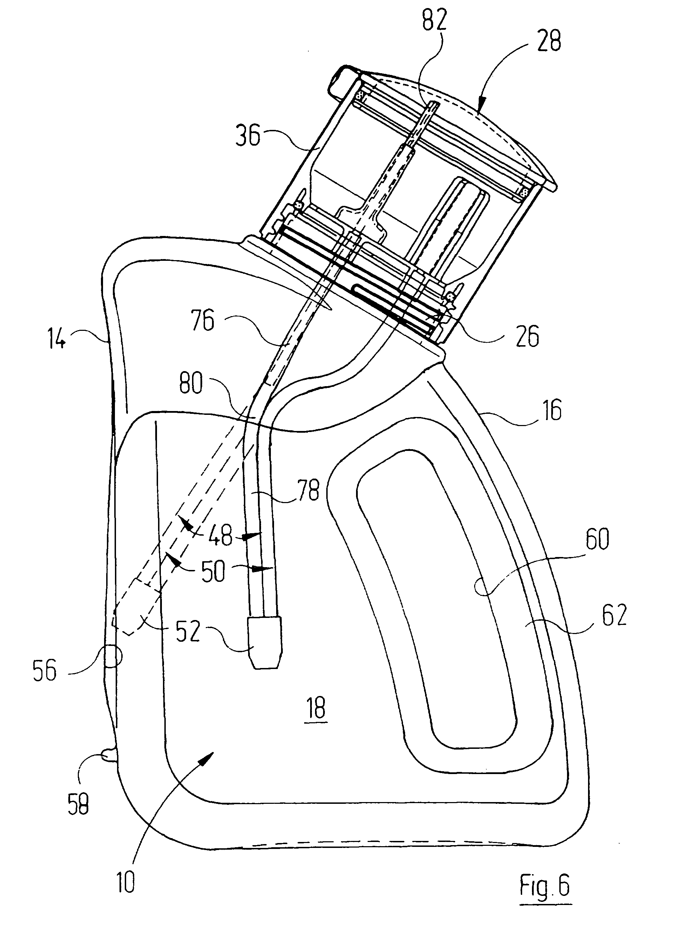

Bei der Flasche nach Figur 6 hat eines der Tauchrohre 48 zwei starre Abschnitte 76, 78, die durch einen elastischen Rohrabschnitt 80 verbunden sind. Dieser ist im unbelasteten Zustand gekrümmt, und die anderen Tauchrohre sind aus flexiblem Material hergestellt, so daß die Tauchrohranordnung normalerweise die in Figur 6 gezeigte Stellung einnimmt. Bei einem Behälter, der insgesamt zwei l Fassungsvermögen hat, ist diese Lage so gewählt, daß unter den Enden der Tauchrohre noch ein Flüssigkeitsvolumen von 1 l liegt.

In dem Tauchrohr 48 ist ein starrer Stab 82 verschiebbar, der in transversaler Querschnittsansicht die Form eines Kreuzes hat, zwischen dessen Längsrippen axiale Flüssigkeitsdurchgänge verbleiben.

Schiebt man den Stab 82 aus der in Figur 6 gezeigten Stellung voll in den Anschlußstutzen 40 ein, so biegt er das Tauchrohr 48 gerade und die Tauchrohranordnung erhält die in Figur 6 gestrichelt eingezeichnete Geometrie. In dieser kann der Flaschenkörper 10 wieder vollständig leergesaugt werden, wie oben beschrieben.

Es versteht sich, daß man durch nur teilweises Vorschieben des Stabes 82 Zwischenstellungen der Enden der Tauchrohre einstellen kann, so daß man die absaugbare Flüssigkeitsmenge zwischen den in Figur 6 eingegebenen Endlagen der Tauchrohre kontinuierlich einstellen kann. Um das jeweils dann ablaugbare Flüssigkeitsvolumen vorgeben zu können, kann der Stab 82 mit einer entsprechenden Skala versehen sein, welche an der Oberkante des Anschlußstutzens 40 abgelesen wird.

Bei der in Figur 6 gezeigten Flasche hat man zusätzlich zu den gerade beschriebenen Möglichkeiten der Einstellung der abgegebenen Flüssigkeitsmenge zusätzlich noch die schon bei den vorhergehenden Ausführungsbeispielen beschriebene, die sich durch Auswahl der Standfläche ergibt. Durch Kombination beider Möglichkeiten kann man eine noch größere Anzahl fest vorgegebener unterschiedlicher Flüssigkeitsmengen einstellen, die aus dem Behälter ohne visuelle Kontrolle abgesaugt werden können.

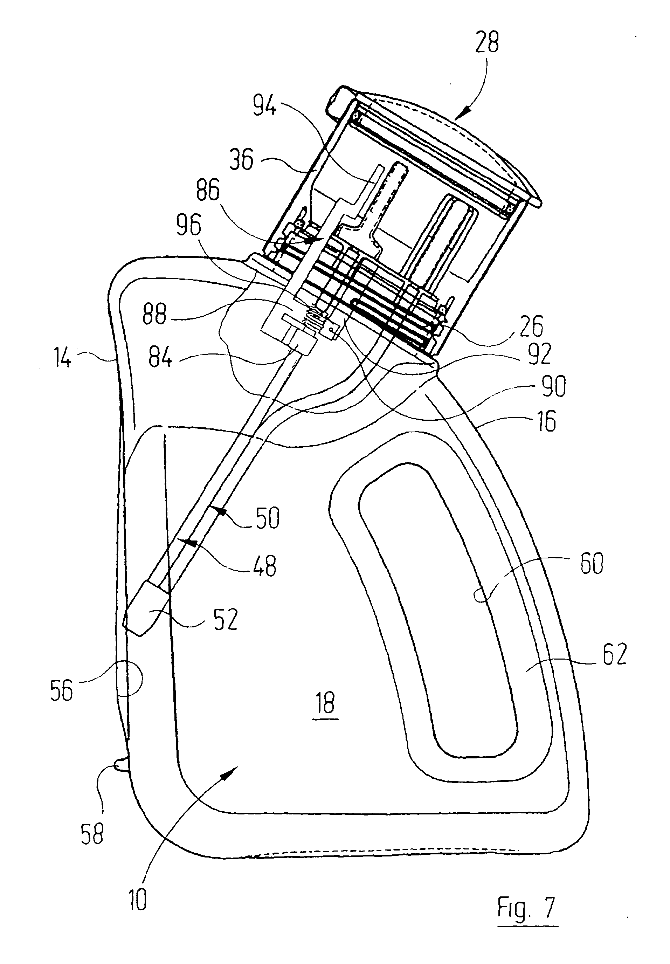

Beim Ausführungsbeispiel nach Figur 7 ist das eine der Tauchrohre 48 starr und über eine Schelle 84 mit einem zweiarmigen Hebel 86 verbunden. Dessen Lagerarm 88 ist über einen Stift 90 an einem Ansatz 92 der Tragwand 40 gelagert. Ein gekröpfter Betätigungsarm 94 des Hebels 86 erstreckt sich zur offenen Seite der Umfangswand 30 hin. Das abgabeseitige Ende des Tauchrohres 48 ist über einen Faltenbalg 96 mit dem zugehörigen Anschlußstutzen 40 verbunden. Die anderen Tauchrohre sind wieder als flexible Schläuche ausgebildet.

Durch Verschwenken des Hebels 86 läßt sich die Tauchrohranordnung wieder in zwei Endlagen stellen, von denen die eine in Figur 7 durch ausgezogene Linien, die andere durch gestrichelte Linien wiedergegeben ist, um zwei unterschiedliche abzugebende Flüssigkeitsvolumina vorzugeben. Es versteht sich, daß wiederum Zwischenstellungen einstellbar sind, wie unter Bezugnahme auf Figur 6 im einzelnen beschrieben. Auch bezüglich der zusätzlichen Modifizierbarkeit der vorgegebenen Flüssigkeitsvolumina durch Änderung der Aufstellfläche wird auf die Ausführungen zu Figur 6 verwiesen.

## Patentansprüche

1. Behälter zum Abgeben mindestens zweier vorgegebener Flüssigkeitsvolumina, mit einem in das Behälterinnere geführten Tauchrohr (48), bei dem Mittel (12, 16) zum Ändern der Lage des Tauchrohres (48) bezogen auf den Spiegel der im Behälter (10) befindlichen Flüssigkeit in mindestens zwei Lagen vorgesehen sind, wobei in der ersten dieser Lagen das Ende des Tauchrohres (48) so liegt, dass nach dem Absaugen der Flüssigkeit ein erstes Flüssigkeits-Restvolumen verbleibt, und in der zweiten Lage das Ende des Tauchrohres (48) so zu liegen kommt, dass nach dem Absaugen der Flüssigkeit ein zweites Flüssigkeits-Restvolumen verbleibt, wobei das erste Flüssigkeits-Restvolumen größer ist als das zweite Flüssigkeits-Restvolumen, **dadurch gekennzeichnet, daß** die Mittel zum Einstellen der unterschiedlichen Lagen des Behälters (10) unterschiedliche Standflächen (12, 16) des Behälters umfassen.

2. Behälter nach Anspruch 1, **dadurch gekennzeichnet,**
**daß** mindestens zwei der unterschiedlichen Standflächen einen im wesentlichen rechten Winkel miteinander einschließen.

3. Behälter zum Abgeben mindestens zweier vorgegebener Flüssigkeitsvolumina, mit einem in das Behälterinnere geführten Tauchrohr (48), bei dem Mittel (12, 16) zum Ändern der Lage des Tauchrohres (48) bezogen auf den Spiegel der im Behälter (10) befindlichen Flüssigkeit in mindestens zwei Lagen vorgesehen sind, wobei in der ersten dieser Lagen das Ende des Tauchrohres (48) so liegt, dass nach dem Absaugen der Flüssigkeit ein erstes Flüssigkeits-Restvolumen verbleibt, und in der zweiten Lage das Ende des Tauchrohres (48) so zu liegen kommt, dass nach dem Absaugen der Flüssigkeit ein zweites Flüssigkeits-Restvolumen verbleibt, wobei das erste Flüssigkeits-Restvolumen größer ist als das zweite Flüssigkeits-Restvolumen, **dadurch gekennzeichnet, daß** die Mittel zum Einstellen der unterschiedlichen Lagen, des Behälters (10) unterschiedliche Aufhängestelle (68, 70) umfassen.

4. Behälter nach einem der Ansprüche 1 bis 3, **dadurch gekennzeichnet, daß** das Ende des Tauchrohres (48) einer Wand (14) des Behälters (10) benachbart ist.

5. Behälter nach Anspruch 4, **dadurch gekennzeichnet, daß** die dem Ende des Tauchrohres (48) benachbarte Wand (14) mit einer das Ende des Tauchrohres (48) aufnehmenden Vertiefung (56) ausgebildet ist.

6. Behälter nach einem der Ansprüche 1-5, **dadurch gekennzeichnet, daß** das Tauchrohr (48) und mindestens ein weiteres Tauchrohr (50) an ihren freien Enden zusammengefaßt sind und an ihren abgabeseitigen Enden mit unterschiedlichen Fittings (40, 42, 44) verbunden sind.

7. Behälter nach einem der Ansprüche 1-6, **dadurch gekennzeichnet, daß** das abgabeseitige Ende des Tauchrohres (48) von einem Zapfteil (28) getragen ist, welches auf einen Stutzen (26) des Behälters (10) lösbar aufgesetzt ist.

8. Behälter nach Anspruch 7, **dadurch gekennzeichnet, daß** das Zapfteil (28) auf den Stutzen (26) des Behälters (10) aufgeschraubt ist.

9. Behälter nach Anspruch 7 in Verbindung mit Anspruch 8, **dadurch gekennzeichnet, daß** das zapf-teil (28) eine die verschiedenen Fittings (40, 42, 44) axial überragende Umfangswand (30) aufweist, die durch einen Deckel (38) dicht verschließbar ist.

10. Behälter nach Anspruch 9, **dadurch gekennzeichnet,**
**daß** das Zapfteil (28) ein Kunststoffspritzteil ist und der Deckel (38) über ein Filmscharnier (32) an die Umfangswand (30) angespritzt ist.

11. Behälter nach Anspruch 10, **dadurch gekennzeichnet**,
das Filmscharnier (32) zwei beabstandete Gelenkbereiche (34, 36) aufweist.

12. Behälter nach einem der Ansprüche 6-11, **dadurch gekennzeichnet, daß** das zapfteil (28) mindestens eine Entlüftungsöffnung (54) aufweist.

13. Behälter nach einem der Ansprüche 1, 2 und 4-12, **dadurch gekennzeichnet, daß** der Behälter (10) in seitlicher Sicht gesehen eine erste Aufstellwand (12) und eine hierzu im wesentlichen senkrechte längere Aufstellwand (14) und eine die Enden dieser beiden Wände verbindende etwa viertel-elliptische Wand (16) aufweist, welche Wände zusammen eine Umfangswand des Behälters bilden, und daß die Umfangswand des Behälters durch konvex gewölbte (24) Seitenwände (18, 20) zum Behälter verschlossen sind, wobei das Abgabeende des Tauchrohres (48) in der Nachbarschaft des spitzen Scheitels der viertelelliptischen Wand (16) liegt.

14. Behälter nach Anspruch 13, **gekennzeichnet durch** eine dem stumpfen Scheitel der teilelliptischen Wand (16) benachbarten Durchgreiföffnung (60).

## Claims

1. Container for delivering at least two predetermined volumes of liquid, comprising an immersion tube (48) which extends into the container interior, wherein means (12, 16) for changing the position of the immersion tube (48) relative to the level of the liquid contained in the container (10) in at least two positions are provided, wherein in the first of said positions the end of the immersion tube (48) rests such that after the aspiration of the liquid a first residual volume of liquid is left, and in the second position the end of the immersion tube (48) comes to rest such that after the aspiration of the liquid a second residual volume of liquid is left, wherein the first residual volume of liquid is greater than the second residual volume of liquid, **characterised in that** the means for setting the different positions of the container (10) comprise different standing surfaces (12, 16) of the container.

2. Container according to claim 1, **characterised in that** at least two of the different standing surfaces form substantially a right angle with one an-other.

3. Container for delivering at least two predetermined volumes of liquid, comprising an immersion tube (48) which extends into the container interior, wherein means (12, 16) for changing the position of the immersion tube (48) relative to the level of the liquid contained in the container (10) in at least two positions are provided, wherein in the first of said positions the end of the immersion tube (48) rests such that after the aspiration of the liquid a first residual volume of liquid is left, and in the second position the end of the immersion tube (48) comes to rest such that after the aspiration of the liquid a second residual volume of liquid is left, wherein the first residual volume of liquid is greater than the second residual volume of liquid, **characterised in that** the means for setting the different positions of the container (10) comprise different suspension (68, 70) points.

4. Container according to one of the claims 1 to 3, **characterised in that** the end of the immersion tube (48) is located adjacent to a wall (14) of the container (10).

5. Container according to claim 4, **characterised in that** the wall (14) adjacent to the end of the immersion tube (48) is formed with a depression (56) which receives the end of the immersion tube (48).

6. Container according to one of the claims 1-5, **characterised in that** the immersion tube (48) and at least one further immersion tube (50) are combined at their free ends and are connected at their delivery ends by means of different fittings (40, 42, 44) .

7. Container according to one of the claims 1-6, **characterised in that** the delivery end of the immersion tube (48) is supported by a stopper part (28) which is placed releasably on a nozzle (26) of the container (10).

8. Container according to claim 7, **characterised in that** the stopper part (28) is screwed to the nozzle (26) of the container (10).

9. Container according to claim 7 in connection with claim 8, **characterised in that** the stopper part (28) comprises a peripheral wall (30) which projects axially beyond the different fittings (40, 42, 44) and which is hermetically sealable by a cap (38) .

10. Container according to claim 9, **characterised in that** the stopper part (28) is a plastics injection moulded part and the cap (38) is mounted on the peripheral wall (30) by means of an integral hinge (32).

11. Container according to claim 10, **characterized in that** the integral hinge (32) comprises two spaced hinge sections (34, 36).

12. Container according to one of the claims 6-11, **characterised in that** the stopper part (28) comprises at least one vent opening (54).

13. Container according to one of the claims 1, 2 and 4-12, **characterised in that** the container (10) comprises when viewed laterally a first standing wall (12) and a standing wall (14) which is longer than the first standing wall (12) and extends substantially perpendicular thereto, and a roughly quarter-elliptical wall (16) connecting the ends of both of these walls, which walls form together a peripheral wall of the container, the peripheral wall of the container being sealed by side walls (18, 20) which are convexly bowed (24) relative to the container, wherein the delivery end of the immersion tube (48) lies in the vicinity of the acute apex of the quarter-elliptical wall (16).

14. Container according to claim 13, **characterised in that** a reach-through opening (60) is formed adjacent to the obtuse apex of the part-elliptical wall (16).

## Revendications

1. Récipient pour délivrer au moins deux volumes prédéterminés de liquide, doté d'un tube d'immersion (48) qui s'étend à l'intérieur du récipient, selon lequel des moyens (12, 16) sont prévus pour modifier la position du tube d'immersion (48), par rapport au niveau du liquide se trouvant dans le récipient (10), dans au moins deux positions, sachant que dans la première de ces positions, l'extrémité du tube d'immersion (48) est placée de telle sorte qu'un premier volume résiduel de liquide reste présent à la suite de l'aspiration du liquide, et que dans la deuxième position, l'extrémité du tube d'immersion (48) vient se placer de telle sorte qu'un deuxième volume résiduel de liquide reste présent à la suite de l'aspiration du liquide, sachant que le premier volume résiduel de liquide est plus grand que le deuxième volume résiduel de liquide, **caractérisé en ce que** les moyens pour régler les différentes positions du récipient (10) comprennent des surfaces de pose différentes (12, 16) du récipient.

2. Récipient selon la revendication 1, **caractérisé en ce qu'**au moins deux des surfaces de pose différentes forment entre elles un angle essentiellement droit.

3. Récipient pour délivrer au moins deux volumes prédéterminés de liquide, doté d'un tube d'immersion (48) qui s'étend à l'intérieur du récipient, selon lequel des moyens (12, 16) sont prévus pour modifier la position du tube d'immersion (48), par rapport au niveau du liquide se trouvant dans le récipient (10), dans au moins deux positions, sachant que dans la première de ces positions, l'extrémité du tube d'immersion (48) est placée de telle sorte qu'un premier volume résiduel de liquide reste présent à la suite de l'aspiration du liquide, et que dans la deuxième position, l'extrémité du tube d'immersion (48) vient se placer de telle sorte qu'un deuxième volume résiduel de liquide reste présent à la suite de l'aspiration du liquide, sachant que le premier volume résiduel de liquide est plus grand que le deuxième volume résiduel de liquide, **caractérisé en ce que** les moyens pour régler les différentes positions du récipient (10) comprennent des points de suspension différents (68, 70).

4. Récipient selon l'une des revendications 1 à 3, **caractérisé en ce que** l'extrémité du tube d'immersion (48) est voisine d'une paroi (14) du récipient (10).

5. Récipient selon la revendication 4, **caractérisé en ce que** l'extrémité (14) voisine de l'extrémité du tube d'immersion (48) est réalisée avec un renfoncement (56) recevant l'extrémité du tube d'immersion (48).

6. Récipient selon l'une des revendications 1 à 5, **caractérisé en ce que** le tube d'immersion (48) et au moins un autre tube d'immersion (50) sont réunis à leurs extrémités libres et sont reliés à différents raccords (40, 42, 44) à leurs extrémités côté délivrance.

7. Récipient selon l'une des revendications 1 à 6, **caractérisé en ce que** l'extrémité côté délivrance du tube d'immersion (48) est portée par un élément formant bouchon (28) qui est monté de manière amovible sur une tubulure (26) du récipient (10).

8. Récipient selon la revendication 7, **caractérisé en ce que** l'élément formant bouchon (28) est vissé sur la tubulure (26) du récipient (10).

9. Récipient selon la revendication 7 conjointement avec la revendication 8, **caractérisé en ce que** l'élément formant bouchon (28) présente une paroi périphérique (30) qui dépasse axialement les différents raccords (40, 42, 44) et qui peut être fermée de manière étanche par un couvercle (28).

10. Récipient selon la revendication 9, **caractérisé en ce que** l'élément formant bouchon (28) est une pièce en matière plastique moulée par injection, et le couvercle (38) est rapporté par moulage par injection sur la paroi périphérique (30) par l'intermédiaire d'une charnière pelliculaire (32).

11. Récipient selon la revendication 10, **caractérisé en ce que** la charnière pelliculaire (32) présente deux régions d'articulation distantes (34, 36).

12. Récipient selon l'une des revendications 6 à 11, **caractérisé en ce que** l'élément formant bouchon (28) présente au moins une ouverture (54) d'évacuation d'air.

13. Récipient selon l'une des revendications 1, 2 et 4 à 12, **caractérisé en ce que** le récipient (10) présente, considéré en vue de côté, une première paroi de pose (12), une paroi de pose plus longue (14), essentiellement perpendiculaire à la précédente, et une paroi (16) environ en forme de quart d'ellipse reliant les extrémités de ces deux parois, lesdites parois formant conjointement une paroi périphérique du récipient, et **en ce que** la paroi périphérique du récipient est fermée, pour former le récipient, par des parois latérales (18, 20) à bombement convexe (24), sachant que l'extrémité de délivrance du tube d'immersion (48) se trouve au voisinage du sommet aigu de la paroi (16) en forme de quart d'ellipse.

14. Récipient selon la revendication 13, **caractérisé par** une ouverture traversante de préhension (60) voisine du sommet obtus de la paroi (16) partiellement elliptique.
